# EUROPÄISCHE PATENTSCHRIFT

(11) **EP 4 388 945 B1**
(45) Veröffentlichungstag und Bekanntmachung des Hinweises auf die Patenterteilung: **12.11.2025**
(21) Anmeldenummer: 23211756.4
(22) Anmeldetag: 23.11.2023
(51) Int. Cl.: A47J 31/36, A47J 31/44, A47J 31/52

(54) **KAFFEEZUBEREITUNGSEINRICHTUNG UND VERFAHREN ZUR ERMITTLUNG EINER VERPRESSKRAFT UND EINES BRÜHDRUCKS MIT EINER SOLCHEN KAFFEEZUBEREITUNGSEINRICHTUNG**
COFFEE PREPARATION DEVICE AND METHOD FOR DETERMINING A PRESSING FORCE AND A BREWING PRESSURE WITH SUCH A COFFEE PREPARATION DEVICE
DISPOSITIF DE PRÉPARATION DE CAFÉ ET PROCÉDÉ DE DÉTERMINATION D'UNE FORCE DE COMPRESSION ET D'UNE PRESSION D'INFUSION AVEC UN TEL DISPOSITIF DE PRÉPARATION DE CAFÉ

(30) Priorität: 21.12.2022 DE 102022214165
(43) Veröffentlichungstag der Anmeldung: 26.06.2024
(73) Patentinhaber: BSH Hausgeräte GmbH, 81739 München (DE)
(72) Erfinder: Fisch, Markus, 84326 Falkenberg (DE)

(56) Entgegenhaltungen:
- EP-A1- 2 881 016
- US-A1- 2015 351 580
- US-A1- 2022 022 683
- US-B2- 9 578 986

## Beschreibung

Die vorliegende Erfindung betrifft eine Kaffeezubereitungseinrichtung und ein Verfahren zur Ermittlung einer Verpresskraft und eines Brühdrucks in einer Brühkammer einer solchen Kaffeezubereitungseinrichtung.

Mit dem Tampern, bei welchem gemahlener Kaffee (Kaffeepulver) vor dem eigentlichen Brühen gegen ein Sieb (Brühsieb) gedrückt wird, soll ein gleichmäßig hohes und gleichmäßig verdichtetes Kaffeebett im Sieb erreicht werden, damit das während des Brühens durchgepresste Brühwasser das Kaffeepulver möglichst gleichmäßig extrahiert. Das Tampern erfolgt dabei üblicherweise von Hand mittels eines Stempels. Erfolgt ein automatisches Tampern, so wird hierzu beispielsweise ein Verpressmechanismus eingesetzt. Das Tampern stellt ebenso wie ein Brühdruck einen signifikanten Faktor der Kaffeequalität dar. Eine Messung der aufgebrachten Tamperkraft findet derzeit nicht statt, während der Brühdruck nur bei höherwertigen Kaffeezubereitungseinrichtungen über ein Manometer angezeigt wird. Bei vielen Kaffeezubereitungseinrichtungen, wie z.B. bei Siebträgermaschinen wird der Brühdruck jedoch nicht erfasst. Bei Siebträgermaschinen im Speziellen wird oft der Druck lediglich über ein Manometer angezeigt und der Kunde muss über den Mahlgrad, Mahl- bzw. Pulvermenge und Verpresskraft des Pulvers den Gegendruck einstellen, da die weiteren Parameter wie z.B. Mahlgradverteilung, Brühgeschwindigkeit/Durchflussgeschwindigkeit, Siebgeometrie, etc. nicht veränderbar sind.

Nachteilig bei bisherigen Kaffeezubereitungseinrichtungen ist, dass ohne eine genaue Erfassung einer Tamperkraft und eines Brühdrucks die Herstellung von Kaffeegetränken mit gleichbleibend hoher Qualität nicht oder nur schwierig möglich ist.

Ferner ist beispielsweise aus der Druckschrift EP 2881016 A1 eine Siebträgermaschine bekannt, bei der ein Stößel das Kaffeemehl verpresst und dabei eine Verpresskraft aufgenommen wird.

Die vorliegende Erfindung beschäftigt sich daher mit dem Problem, eine Kaffeezubereitungseinrichtung anzugeben, mittels welcher insbesondere Kaffeegetränke mit gleichbleibend hoher Qualität einfacher herstellbar sind.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Verpresskraft direkt über eine zwischen einem Bauteil, beispielsweise einem Gehäuse, und einer Halterung für einen Siebträger angeordnete Kraftmesseinrichtung zu erfassen und eine erhöhte Gesamtkraft auf diese Halterung, ausgelöst durch einen in einer Brühkammer auftretenden Brühdruck, ebenfalls über die Kraftmesseinrichtung zu bestimmen, um anschließend den in der Brühkammer herrschenden Brühdruck daraus zu errechnen. Die erfindungsgemäße Kaffeezubereitungseinrichtung besitzt dabei ein Bauteil, insbesondere ein Gehäuse, sowie eine daran über die vorher genannte Kraftmesseinrichtung, beispielsweise eine Wägeeinrichtung oder einen Dehnungsmessstreifen, angeordnete Halterung für einen Siebträger. Ebenfalls vorgesehen ist ein in einer vordefinierten Richtung verstellbarer Stößel, der bei dem eigentlichen Brühvorgang in den Siebträger eingreift. Der Siebträger sowie der darin eintauchende Stößel begrenzen dabei eine Brühkammer, in welcher während eines Brühvorgangs gemahlener Kaffee (Kaffeepulver) angeordnet ist. Zudem weist der Stößel einen in die Brühkammer führenden Wasserzulauf auf, über welchen mit Druck beaufschlagtes Wasser in die Brühkammer einleitbar ist. Die Kraftmesseinrichtung ist dabei erfindungsgemäß zur Erfassung einer bei einem Verstellen des Stößels in der vordefinierten Richtung in den Siebträger auftretenden und auf in der Brühkammer angeordnetes Kaffeepulver einwirkenden Verpresskraft F1 sowie einer durch anschließendes Einleiten von druckbeaufschlagtem Wasser in die Brühkammer auf die Halterung wirkenden Gesamtkraft F2 ausgebildet. Die Verpresskraft F1 wird dabei zum Tampern des Kaffeepulvers und zur Herstellung eines gleichmäßig hohen und gleichmäßig verdichteten Kaffeebetts im Siebträger verwendet, damit das während des Brühens durchgepresste Brühwasser das Kaffeepulver möglichst gleichmäßig durchströmt. Die Verpresskraft F1 wird dabei dadurch bewirkt, dass der Stößel in den Siebträger bewegt wird, sodass das in der Brühkammer angeordnete Kaffeepulver zunehmend komprimiert wird. Der in der vordefinierten Richtung beweglich gelagerte Stößel taucht dabei in den Siebträger ein, wodurch bei einem zunehmenden Verstellen des Stößels, das in der Brühkammer angeordnete Kaffeepulver zunehmend verdichtet wird und dadurch eine zunehmende Kraft, nämlich die Verpresskraft F1, auf den Siebträger und die Halterung wirkt. Diese rein mechanisch durch das Verstellen des Stößels bewirkte Verpresskraft F1 wird dabei von der Kraftmesseinrichtung erfasst. Ist das Kaffeepulver in der Brühkammer mit einer, insbesondere vordefinierten, Verpresskraft F1 verpresst, das heißt getampert, wird zum Brühen des Kaffees, beispielsweise eines Espresso, Wasser unter Druck in die Brühkammer eingeleitet. Das unter Druck in die Brühkammer eingeleitete Wasser erhöht die auf den Stößel und die Halterung und damit die Kraftmesseinrichtung einwirkende Kraft und führt zu der auf die Halterung und die Kraftmesseinrichtung wirkenden Gesamtkraft F2, welche zusätzlich von der Kraftmesseinrichtung erfasst wird. Erfindungsgemäß ist nun zudem eine Auswerte-/Steuereinrichtung vorgesehen, die derart ausgebildet ist, dass sie über eine Differenz F2 - F1 der von der Kraftmesseinrichtung gemessenen Kräfte F2, F1 und einer der Brühkammer zugewandten Fläche A des Stößels einen Brühdruck p = (F2-F1)/A in der Brühkammer errechnet bzw. ermittelt. Die durch das druckbeaufschlagte Wasser resultierende Gesamtkraft F2 ist dabei größer als die Verpresskraft F1, sodass die Differenz F2 - F1 stets größer null ist. Die Gesamtkraft F2 bildet somit die Summe aus der eigentlichen Verpresskraft F1 und der durch das Einleiten von druckbeaufschlagtem Wasser in die Brühkammer resultierenden Kraft. Durch die erfindungsgemäße Kaffeezubereitungseinrichtung ist es somit vergleichsweise einfach, insbesondere auch ohne zusätzliche und teure sowie aufwendig zu verkabelnde Drucksensoren möglich, sowohl die Verpresskraft F1 als auch den Brühdruck p in der Brühkammer zuverlässig zu bestimmen, was erheblichen Einfluss auf die Qualität der herzustellenden Kaffeegetränke hat. Insbesondere können durch den mit der Auswerte-/Steuereinrichtung ermittelten Brühdruck p weitere Parameter der Kaffeezubereitungseinrichtung, wie beispielsweise eine Brühgeschwindigkeit, ein Mahlgrad oder andere Faktoren beeinflusst werden, wodurch die Herstellung von Kaffeegetränken mit gleichbleibend hoher Qualität einfacher möglich ist.

Bei einer weiteren vorteilhaften Ausführungsform der erfindungsgemäßen Kaffeezubereitungseinrichtung ist in dem Siebträger ein Kaffeeauslasskanal angeordnet, der über ein Sieb mit der Brühkammer verbunden ist. Eine Ableitung von in der Brühkammer gebrühtem Kaffee erfolgt somit in diesem Fall über den Kaffeeauslasskanal, wobei zunächst der gebrühte Kaffee das im Siebträger integrierte Sieb durchdringt. Über das Sieb in dem Siebträger wird das Kaffeemehl in der Brühkammer zurückgehalten. Das Sieb kann dabei einen Teil einer der Brühkammer zugewandten Oberfläche des Siebträgers belegen und kann beispielsweise aus Metall ausgebildet und insbesondere entnehmbar sein. Über eine vordefinierte Feinheit des Siebs kann Einfluss auf den in der Brühkammer entstehenden Brühdruck p genommen werden.

Bei einer weiteren vorteilhaften Ausführungsform der erfindungsgemäßen Kaffeezubereitungseinrichtung ist der Stößel über eine Ringdichtung gegenüber einer Innenwand der Halterung abgedichtet. Eine derartige Ringdichtung ermöglicht eine zuverlässige und insbesondere auch druckdichte Abdichtung der Brühkammer im Übergang zwischen einer Innenwand der Halterung und einer Außenmantelfläche des Stößels. Die Ringdichtung ist dabei derart ausgelegt, dass sie ein dichtes Verfahren des Stößels relativ zur Halterung ermöglicht. Eine derartige Ringdichtung kann beispielsweise als O-Ringdichtung aus Kunststoff kostengünstig und zugleich qualitativ hochwertig hergestellt werden.

Bei einer besonders bevorzugten Ausführungsform der erfindungsgemäßen Lösung ist die Kraftmesseinrichtung als Wägeeinrichtung/Wägezelle oder als Dehnungsmessstreifen ausgebildet. Derartige Wägezellen sind in anderen Anwendungen bereits langjährig erprobt und ermöglichen beispielsweise über einen elastischen und kraftabhängig verformbaren Federkörper eine äußerst exakte, insbesondere auch digitale Erfassung einer Kraft. Dehnungsmessstreifen können dabei eine rein digitale Erfassung einer darauf aufgebrachten Kraft ermöglichen, indem bereits eine äußerst geringe Verformung den elektrischen Widerstand ändert. Vorteilhaft bei derartigen Dehnungsmessstreifen ist zudem, dass diese nicht nur kostengünstig herstellbar sind, sondern auch nur einen äußerst geringen Bauraum erfordern. Im Vergleich zu beispielsweise einer Wägezelle bietet dies somit konstruktive Bauraumvorteile.

Bei einer weiteren Ausführungsform der Kaffeezubereitungseinrichtung ist die Auswerte-/Steuereinrichtung derart ausgebildet, dass sie eine Verstellbewegung des Stößels in Abhängigkeit des ermittelten Brühdrucks p steuert. Der tatsächlich in der Brühkammer auftretende Brühdruck p wird dabei einerseits von Leistungsdaten einer eingesetzten Wasserpumpe, beispielsweise einem Maximaldruck sowie einer maximal möglichen Fördermenge, bestimmt, sowie andererseits durch einen Durchflusswiderstand des in der Brühkammer angeordneten Kaffeepulvers. Dieser Durchflusswiderstand wird beispielsweise durch eine Durchflussfläche, eine Durchflusslänge, einen Verpressgrad sowie einen Mahlgrad bestimmt und baut sich beim Quellen des Kaffeepulvers auf. Der mittels der Auswerte-/Steuereinrichtung, die mit der Kraftmesseinrichtung kommunizierend verbunden ist, ermittelte Brühdruck p ermöglicht so die Steuerung einer Verstellbewegung des Stößels, worüber beispielsweise die Verpresskraft und darüber auch der Brühdruck p in der Brühkammer beeinflussbar sind.

Zusätzlich oder alternativ kann die Auswerte-/Steuereinrichtung auch derart ausgebildet sein, dass sie eine Leistung einer Wasserpumpe in Abhängigkeit des ermittelten Brühdrucks p steuert, sodass bei einem zu hohen ermittelten Brühdruck p beispielsweise die Fördermenge der Wasserpumpe reduziert wird. Hierdurch kann insbesondere ein Geschmack, der maßgeblich abhängig von dem Brühdruck p ist, besser eingestellt werden. Insbesondere kann durch eine Veränderung des Brühdrucks p ein Herauslösen von Bitterstoffen aus dem gemahlenen Kaffeepulver beeinflusst werden, wodurch es insgesamt deutlich einfacher wird, Kaffeegetränke mit gleichbleibend hoher Geschmacksqualität herstellen zu können.

Vorteilhafterweise ist zwischen dem Wasserzulauf und der Brühkammer ein weiteres Sieb angeordnet ist. Über dieses weitere Sieb kann von dem Wasserzulauf in die Brühkammer einströmendes Wasser besser verteilt und ein unerwünschtes Übertreten von Kaffeepulver in den Wasserzulauf zuverlässig verhindert werden.

Die vorliegende Erfindung beruht weiter auf dem allgemeinen Gedanken, ein Verfahren zur Ermittlung einer Verpresskraft F1 und eines Brühdrucks p mit einer in den vorherigen Absätzen beschriebenen Kaffeezubereitungseinrichtung anzugeben, bei dem zunächst gemahlener Kaffee in Form von beispielsweise Kaffeemehl oder Kaffeepulver in den Siebträger eingefüllt wird. Anschließend wird der Siebträger über beispielsweise eine Art Bajonettverschluss in der Halterung eingehängt und damit die Brühkammer geschlossen. Wiederum anschließend wird der Stößel gegen den Siebträger verstellt, sodass der Stößel schließlich in den Siebträger eintaucht und das darin angeordnete Kaffeepulver verdichtet, das heißt tampert. Eine Verstellung des Stößels erfolgt dabei so lange, bis eine vordefinierte Verpresskraft F1 an der zwischen der Halterung und beispielsweise einem Bauteil, insbesondere einem Gehäuse, angeordneten Kraftmesseinrichtung erreicht wird. Die Verpresskraft F1 wird dabei über den Weg in Verstellrichtung zwischen dem Bauteil, insbesondere dem Gehäuse, und dem Stößel erzeugt. Ist die vordefinierte Verpresskraft F1 kurzfristig oder dauerhaft erreicht, wird Wasser über eine Wasserpumpe gefördert und über den Wasserzulauf in die Brühkammer eingeleitet, wodurch sich ein Brühdruck p aufbaut, der die Kraft auf den Siebträger und die Halterung und damit die Kraftmesseinrichtung erhöht und an letzterer eine Gesamtkraft F2 erzeugt. Diese Gesamtkraft F2 besteht dabei aus der eigentlichen Verpresskraft F1 bzw. verbleibender Verpresskraft F1 und der zusätzlich durch den Brühdruck p aufgebauten Kraft.

Die Auswerte-/Steuereinrichtung der erfindungsgemäßen Kaffeezubereitungseinrichtung ermittelt dann eine Differenz aus der Gesamtkraft F2 und der Verpresskraft F1. Diese Differenz F2 - F1 steht für die vom Brühdruck p erzeugte Kraft. Durch die exakt vordefinierte Fläche A des Stößels, mittels welcher dieser in den Siebträger eintaucht, kann nun der ausschließlich durch den Wasserdruck aufgebaute Brühdruck p als Quotient aus der Differenz F2 - F1 und der Fläche A ermittelt werden. Mit dem erfindungsgemäßen Verfahren ist es somit vergleichsweise einfach möglich, sowohl die mittels mechanischem Verstellen erzeugte Verpresskraft F1 zu ermitteln, als auch die Gesamtkraft F2, die zusätzlich das unter Druck in die Brühkammer eingeleitete Wasser berücksichtigt. Mittels des erfindungsgemäßen Verfahrens ist es somit erstmals möglich, nicht nur die Verpresskraft F1 aktiv und äußerst genau zu bestimmen, sondern zugleich auch die durch den Brühdruck p erzeugte Kraft F2 - F1, wodurch eine Steuerung der erfindungsgemäßen Kaffeezubereitungseinrichtung deutlich mehr Möglichkeiten erhält, sodass insbesondere Kaffeegetränke mit gleichbleibend hoher Qualität einfacher hergestellt werden können.

Bei einer vorteilhaften Weiterbildung des erfindungsgemäßen Verfahrens steuerte die Auswerte-/Steuereinrichtung eine Verstellbewegung des Stößels in Abhängigkeit des ermittelten Brühdrucks p. Ist somit beispielsweise der in der Brühkammer ermittelte Brühdruck p größer als ein vordefinierter Grenzdruck, so kann der Stößel geringfügig zurückgefahren und damit der Brühdruck p reduziert werden. Zusätzlich oder alternativ ist es auch denkbar, dass die Auswerte-/Steuereinrichtung eine Wasserzufuhr in die Brühkammer in Abhängigkeit des ermittelten Brühdrucks p steuert, sodass beispielsweise bei einem in der Brühkammer ermittelten Brühdruck p, der oberhalb eines vordefinierten Grenzdrucks liegt, die Wasserzufuhr reduziert und dadurch der Brühdruck p in der Brühkammer ebenfalls reduziert werden kann. Durch die erfindungsgemäße einfache Beeinflussung des Brühdrucks p in der Brühkammer kann insbesondere auf die Bitterkeit des Kaffees einfach Einfluss genommen werden. Dabei können auch noch weitere Parameter, wie beispielsweise eine Brühtemperatur, etc., beeinflusst werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Vorstehend genannte und nachfolgend noch zu nennende Bestandteile einer übergeordneten Einheit, wie z.B. einer Einrichtung, einer Vorrichtung oder einer Anordnung, die separat bezeichnet sind, können separate Bauteile bzw. Komponenten dieser Einheit bilden oder integrale Bereiche bzw. Abschnitte dieser Einheit sein, auch wenn dies in den Zeichnungen anders dargestellt ist.

Ein bevorzugtes Ausführungsbeispiel der Erfindung ist in den Zeichnungen dargestellt und wird in der nachfolgenden Beschreibung näher erläutert.

Es zeigen, jeweils schematisch:
- Fig. 1: eine Schnittdarstellung durch eine mögliche Ausführungsform einer erfindungsgemäßen Kaffeezubereitungseinrichtung,
- Fig. 2: eine schematische Darstellung eines erfindungsgemäßen Verfahrens zur Ermittlung einer Verpresskraft F1 und eines Brühdrucks p mit einer solchen Kaffeezubereitungseinrichtung.

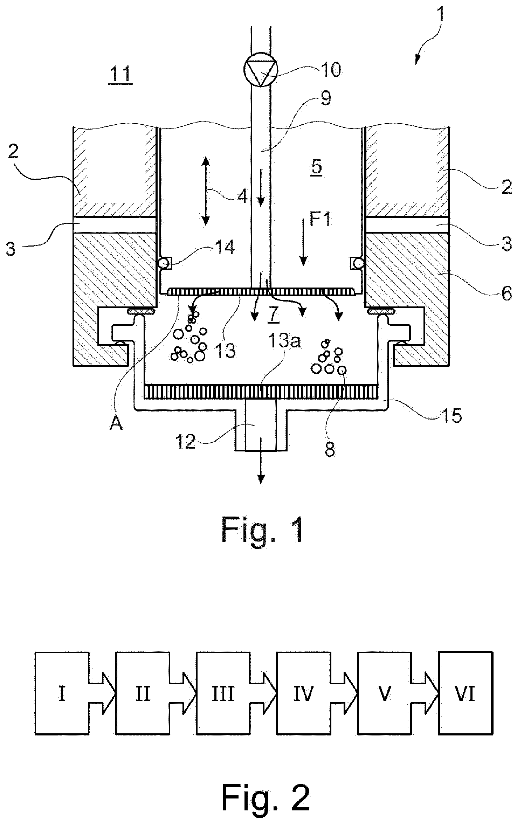

Entsprechend der Figur 1, weist eine erfindungsgemäße Kaffeezubereitungseinrichtung 1 ein Bauteil 2, insbesondere ein Gehäuse, sowie eine daran über eine Kraftmesseinrichtung 3 angeordnete Halterung 6 für einen Siebträger 15 auf, der in einer vordefinierten Richtung 4 verstellbar ist und zumindest bei der Herstellung eines Kaffeegetränks in den Siebträger 15 eingreift. Der Stößel 5 und der Siebträger 15 begrenzen dabei eine Brühkammer 7, in welcher bei der Herstellung eines Kaffeegetränks Kaffeepulver 8 angeordnet ist. Das in der Brühkammer 7 angeordnete Kaffeepulver 8 ist entsprechend der Figur 1 lediglich stark schematisierte und lediglich teilweise dargestellt und während des eigentlichen Brühvorgangs verpresst, d. h. komprimiert.

Des Weiteren weist der Stößel 5 einen in die Brühkammer 7 führenden Wasserzulauf 9 auf, über welchen beispielsweise mittels einer Wasserpumpe 10 druckbeaufschlagtes Wasser in die Brühkammer 7 förderbar ist. Die Kraftmesseinrichtung 3, welche beispielsweise als Wägeeinrichtung oder als Dehnungsmessstreifen ausgebildet sein kann, ist dabei zur Erfassung einer bei einem Verstellen des Stößels 5 in der vordefinierten Richtung 4, in der gemäß der Figur 1 gezeigten Darstellung nach unten, d. h. in den Siebträger hinein, in der Lage, die auf in der Brühkammer 7 angeordnetes Kaffeepulver 8 einwirkende Verpresskraft F1 sowie eine durch Einleiten von druckbeaufschlagtem Wasser in die Brühkammer 7 auf den Siebträger 5 bzw. die Halterung 6 erhöhte Gesamtkraft F2 zu erfassen. Des Weiteren vorgesehen ist eine Auswerte-/Steuereinrichtung 11, welche derart ausgebildet ist, dass sie über eine Differenz F2 - F1 der von der Kraftmesseinrichtung 3 gemessenen Kräfte F2, F1 sowie einer der Brühkammer 7 zugewandten Fläche A des Stößels 5 einen Brühdruck p in der Brühkammer 7 ermittelt.

Die Auswerte-/Steuereinrichtung 11 kann dabei in das Bauteil 2 integriert oder separat zu diesem angeordnet sein. Dabei ist selbstverständlich klar, dass das Bauteil 2 bzw. das Gehäuse der Kaffeezubereitungseinrichtung 1 eine Verbindung zum Stößel 5 hat, um die Kraftdifferenz zwischen F1 mit F2 mittels der Kraftmesseinrichtung 3 messen zu können. Die Kraftmesseinrichtung 3 kann zusammenhängend oder nur auch nur einseitig vorgesehen/angeordnet sein, sodass unterschiedlichste Ausführungsformen denkbar sind.

Wie der Figur 1 weiter zu entnehmen ist, ist in dem Siebträger 15 ein Kaffeeauslasskanal 12 angeordnet, der über ein Sieb 13a mit der Brühkammer 7 verbunden ist. Über das Sieb 13a ist es somit während des Brühvorgangs möglich, den das Kaffeepulver 8 durchdringenden Kaffee in den Kaffeeauslasskanal 12 zu leiten und zugleich das Kaffeepulver in der Brühkammer 7 zurückzuhalten. Ein weiteres Sieb 13, das zwischen dem Wasserzulauf 9 und der Brühkammer 7 angeordnet ist, hilft, das über den Wasserzulauf 9 in die Brühkammer 7 einströmende Wasser besser zu verteilen und damit das Kaffeepulver 8 gleichmäßig zu durchströmen und ein unerwünschtes Übertreten von Kaffeepulver 8 in den Wasserzulauf 9 zuverlässig zu verhindern.

Der Stößel 5 ist über eine Ringdichtung 14 gegenüber einer Innenwand der Halterung 6 abgedichtet, sodass der in der Brühkammer 7 auftretende Druck nur über den Kaffeeauslasskanal 12 abgeleitet werden kann.

Die Auswerte-/Steuereinrichtung 11 ist zudem derart ausgebildet, dass sie eine Verstellbewegung des Stößels 5 und/oder eine Zufuhr von Wasser in die Brühkammer 7, beispielsweise durch eine Steuerung der Leistung der Wasserpumpe 10, in Abhängigkeit des ermittelten Brühdrucks p bzw. eines gewünschten Brühdrucks steuert.

Das erfindungsgemäße Verfahren zur Ermittlung einer Verpresskraft F1 und eines Brühdrucks p mit der in der Figur 1 dargestellten erfindungsgemäßen Kaffeezubereitungseinrichtung 1 funktioniert dabei wie folgt:
Zunächst wird im Verfahrensschritt I gemahlener Kaffee, d. h. Kaffeepulver 8, in den Siebträger 15 eingefüllt. Anschließend wird im Verfahrensschritt II die Brühkammer 7 durch Einhängen des Siebträgers 15 in die Halterung 6 geschlossen sowie im Verfahrensschritt III der Stößel 5 in Richtung des Siebträgers 15, d. h. entsprechend der Figur 1 nach unten, verstellt, bis eine vordefinierte Verpresskraft F1 erreicht und an der Kraftmesseinrichtung 3 erfasst wird. Die Verpresskraft F1 wird dabei über den Weg in der vordefinierten Richtung 4 zwischen dem Bauteil 2, insbesondere dem Gehäuse, und dem Stößel 5 erzeugt. Ist die Verpresskraft F1 erreicht, hat das Kaffeepulver 8 einen vordefinierten Komprimierungs-/Tamperzustand erreicht. Anschließend wird im Verfahrensschritt IV Wasser mittels der Wasserpumpe 10 über den Wasserzulauf 9 in die Brühkammer 7 eingeleitet, woraufhin sich in der Brühkammer 7 ein Brühdruck p aufbaut. Dieser Brühdruck p erhöht die auf den Siebträger 15 und damit die Halterung 6, an welcher der Siebträger 15 eingehängt ist, einwirkende Kraft auf die Gesamtkraft F2, welche dann im Verfahrensschritt V an der Kraftmesseinrichtung 3 erfasst wird. Die an der Kraftmesseinrichtung 3 erfasste Gesamtkraft F2 bildet somit die Summe aus der Verpresskraft F1 und der durch den Brühdruck p zusätzlich erzeugten Kraft. Um nun die durch den Brühdruck p zusätzlich erzeugte Kraft ermitteln zu können, bildet die Auswerte-/Steuereinrichtung 11 im Verfahrensschritt VI eine Differenz F2 - F1, der von der Kraftmesseinrichtung 3 gemessenen Kräfte F2, F1. Durch die bekannte Fläche A des Stößels 5 kann nun der in der Brühkammer 7 herrschende Brühdruck p als Quotient aus der Differenz der beiden Kräfte F2 - F1 und der Fläche A ermittelt werden.

Mit dem erfindungsgemäßen Verfahren ist auch eine Steuerung einer Verstellbewegung des Stößels 5 und/oder einer Leistung bzw. Förderleistung der Wasserpumpe 10 in Abhängigkeit des mittels des erfindungsgemäßen Verfahrens ermittelten Brühdrucks p möglich. So kann beispielsweise bei einem Brühdruck p, der oberhalb eines vordefinierten Grenzbrühdrucks liegt, die Leistung der Wasserpumpe 10 und damit die Wasserzufuhr reduziert und/oder der Stößel 5 leicht nach oben gefahren werden.

Die Auswerte-/Steuereinrichtung 11 kann darüber hinaus die Verpresskraft F1 in Abhängigkeit des ermittelten Brühdrucks p steuern. Ebenfalls ist denkbar, dass die Auswerte-/Steuereinrichtung 11 einen Mahlgrad des Kaffeepulvers 8 in Abhängigkeit des ermittelten Brühdrucks p und/oder eine Mahlmenge an Kaffeepulver 8 in Abhängigkeit des ermittelten Brühdrucks p steuert.

Mit dem erfindungsgemäßen Verfahren ist es somit möglich, die Verpresskraft F1 direkt und deutlich genauer zu messen und so die Kaffeequalität zu verbessern. Durch die exakt ermittelbare Verpresskraft F1 und den ebenfalls exakt und einfach ermittelbaren Brühdruck p kann man durch Änderung weitere Parameter, beispielsweise eine Brühgeschwindigkeit, eine Wasserzufuhr, einen Mahlgrad, den Brühdruck p bzw. die Brühung, etc. beeinflussen.

### Bezugszeichen

- 1: Kaffeezubereitungseinrichtung
- 2: Bauteil, insbesondere ein Gehäuse
- 3: Kraftmesseinrichtung
- 4: vordefinierte Richtung
- 5: Stößel
- 6: Halterung
- 7: Brühkammer
- 8: Kaffeepulver
- 9: Wasserzulauf
- 10: Wasserpumpe
- 11: Auswerte-/Steuereinrichtung
- 12: Kaffeeauslasskanal
- 13: weiteres Sieb
- 13a: Sieb
- 14: Ringdichtung
- 15: Siebträger

- I - VI: Verfahrensschritte

## Patentansprüche

1. Kaffeezubereitungseinrichtung (1),
- mit einem Bauteil (2), insbesondere einem Gehäuse, und einer daran über eine Kraftmesseinrichtung (3) angeordneten Halterung (6) für einen Siebträger (15),
- mit einem in der Haltung (6) einhängbaren Siebträger (15),
- mit einem in einer vordefinierten Richtung (4) in den Siebträger (15) verstellbaren Stößel (5),
- wobei der Stößel (5) und der Siebträger (15) eine Brühkammer (7) begrenzen,
- wobei der Stößel (5) einen in die Brühkammer (7) führenden Wasserzulauf (9) aufweist, über welchen mit Druck beaufschlagtes Wasser in die Brühkammer (7) einleitbar ist,
- wobei die Kraftmesseinrichtung (3) zur Erfassung einer bei einem Verstellen des Stößels (5) in der vordefinierten Richtung (4) in den Siebträger (15) auftretenden und auf in der Brühkammer (7) angeordnetes Kaffeepulver (8) einwirkenden Verpresskraft F1 und einer durch ein anschließendes Einleiten von druckbeaufschlagtem Wasser in die Brühkammer (7) auf den Siebträger (15) wirkenden Gesamtkraft F2 ausgebildet ist,
- mit einer Auswerte-/Steuereinrichtung (11), die derart ausgebildet ist, dass sie über eine Differenz F2 - F1 der von der Kraftmesseinrichtung (3) gemessenen Kräfte F2, F1 und einer der Brühkammer (7) zugewandten Fläche (A) des Stößels (5) einen Brühdruck p = (F2-F1)/A in der Brühkammer (7) ermittelt.

2. Kaffeezubereitungseinrichtung nach Anspruch 1,
**dadurch gekennzeichnet,**
**dass** in dem Siebträger (15) ein Kaffeeauslasskanal (12) vorgesehen ist, der über ein Sieb (13a) mit der Brühkammer (7) verbunden ist.

3. Kaffeezubereitungseinrichtung nach Anspruch 1 oder 2,
**dadurch gekennzeichnet,**
**dass** der Stößel (5) über eine Ringdichtung (14) gegenüber einer Innenwand der Halterung (6) abgedichtet ist.

4. Kaffeezubereitungseinrichtung nach einem der vorhergehenden Ansprüche,
**dadurch gekennzeichnet,**
**dass** die Kraftmesseinrichtung (3) als Wägezelle oder als Dehnungsmessstreifen ausgebildet ist.

5. Kaffeezubereitungseinrichtung nach einem der vorhergehenden Ansprüche,
**dadurch gekennzeichnet,**
**dass** die Auswerte-/Steuereinrichtung (11) derart ausgebildet ist, dass sie eine Verstellbewegung des Stößels (5) in Abhängigkeit des ermittelten Brühdrucks p steuert.

6. Kaffeezubereitungseinrichtung nach einem der vorhergehenden Ansprüche,
**dadurch gekennzeichnet,**
**dass** die Auswerte-/Steuereinrichtung (11) derart ausgebildet ist, dass sie über eine Wasserpumpe (10) eine Zufuhr von Wasser in die Brühkammer (7) in Abhängigkeit des ermittelten Brühdrucks p steuert.

7. Kaffeezubereitungseinrichtung nach einem der vorhergehenden Ansprüche,
**dadurch gekennzeichnet,**
**dass** zwischen dem Wasserzulauf (9) und der Brühkammer (7) ein weiteres Sieb (13) angeordnet ist.

8. Verfahren zur Ermittlung einer Verpresskraft F1 und eines Brühdrucks p in einer Brühkammer (7) einer Kaffeezubereitungseinrichtung (1) nach einem der vorhergehenden Ansprüche, bei dem
- Kaffeepulver (8) in den Siebträger (15) eingefüllt wird,
- die Brühkammer (7) durch Einhängen des Siebträgers (15) in die Halterung (6) geschlossen wird,
- der Stößel (5) in der vordefinierten Richtung (4) in den Siebträger (15) verstellt wird, bis eine vordefinierte Verpresskraft F1 an der Kraftmesseinrichtung (3) erreicht wird,
- anschließend Wasser über den Wasserzulauf (9) in die Brühkammer (7) eingeleitet wird, wodurch die an der Kraftmesseinrichtung (3) gemessene Kraft auf eine Gesamtkraft F2 ansteigt,
- wobei die Gesamtkraft F2 von der Kraftmesseinrichtung (3) erfasst wird,
- die Auswerte-/Steuereinrichtung (11) über eine Differenz F2 - F1 der von der Kraftmesseinrichtung (3) gemessenen Kräfte F2, F1 und einer der Brühkammer (7) zugewandten Fläche A des Stößels (5) einen Brühdruck p = (F2-F1)/A in der Brühkammer (7) ermittelt.

9. Verfahren nach Anspruch 8,
**dadurch gekennzeichnet,**
**dass** die Auswerte-/Steuereinrichtung (11) eine Verstellbewegung des Stößels (5) in Abhängigkeit des ermittelten Brühdrucks p steuert.

10. Verfahren nach Anspruch 8 oder 9,
**dadurch gekennzeichnet,**
**dass** die Auswerte-/Steuereinrichtung (11) eine Wasserzufuhr in die Brühkammer (7) in Abhängigkeit des ermittelten Brühdrucks p steuert.

11. Verfahren nach einem der Ansprüche 8 bis 10,
**dadurch gekennzeichnet,**
**dass** die Auswerte-/Steuereinrichtung (11) die Verpresskraft F1 in Abhängigkeit des ermittelten Brühdrucks p steuert.

12. Verfahren nach einem der Ansprüche 8 bis 11,
**dadurch gekennzeichnet,**
**dass** die Auswerte-/Steuereinrichtung (11) einen Mahlgrad des Kaffeepulvers (8) in Abhängigkeit des ermittelten Brühdrucks p steuert.

13. Verfahren nach einem der Ansprüche 8 bis 12,
**dadurch gekennzeichnet,**
**dass** die Auswerte-/Steuereinrichtung (11) eine Mahlmenge an Kaffeepulver (8) in Abhängigkeit des ermittelten Brühdrucks p steuert.

## Claims

1. Coffee preparation facility (1),
- with a structural part (2), in particular a housing, and a bracket (6) for a portafilter (15) arranged thereon via a force measurement facility (3),
- with a portafilter (15) that can be suspended in the bracket (6),
- with a plunger (5) that can be shifted in the portafilter (15) in a predefined direction (4),
- wherein the plunger (5) and the portafilter (15) delimit a brewing chamber (7),
- wherein the plunger (5) has a water supply (9) that leads into the brewing chamber (7), via which pressurised water can be introduced into the brewing chamber (7),
- wherein the force measurement facility (3) is embodied to capture an injection force F1 that occurs during shifting of the plunger (5) into the portafilter (15) in the predefined direction (4) and acts on coffee powder (8) arranged in the brewing chamber (7) and a total force F2 that acts on the portafilter (15) due to a subsequent introduction of pressurised water into the brewing chamber (7),
- with an evaluation/control facility (11), which is embodied in such a manner that it ascertains a brewing pressure p = (F2-F1)/A in the brewing chamber (7) via a difference F2 - F1 between the forces F2, F1 that are measured by the force measurement facility (3) and an area (A) of the plunger (5) that faces towards the brewing chamber (7).

2. Coffee preparation facility according to claim 1,
**characterised in that**
a coffee outlet channel (12) is provided in the portafilter (15) and is connected to the brewing chamber (7) via a filter (13a).

3. Coffee preparation facility according to claim 1 or 2,
**characterised in that**
the plunger (5) is sealed off from an inner wall of the bracket (6) via a ring seal (14).

4. Coffee preparation facility according to one of the preceding claims,
**characterised in that**
the force measurement facility (3) is embodied as a weighing cell or as a strain gauge.

5. Coffee preparation facility according to one of the preceding claims,
**characterised in that**
the evaluation/control facility (11) is embodied in such a manner that it controls a shifting movement of the plunger (5) as a function of the ascertained brewing pressure p.

6. Coffee preparation facility according to one of the preceding claims,
**characterised in that**
the evaluation/control facility (11) is embodied in such a manner that it controls a supply of water into the brewing chamber (7) via a water pump (10) as a function of the ascertained brewing pressure p.

7. Coffee preparation facility according to one of the preceding claims,
**characterised in that**
a further filter (13) is arranged between the water supply (9) and the brewing chamber (7).

8. Method for ascertaining an injection force F1 and a brewing pressure p in a brewing chamber (7) of a coffee preparation facility (1) according to one of the preceding claims, in which
- coffee powder (8) is poured into the portafilter (15),
- the brewing chamber (7) is closed by suspending the portafilter (15) in the bracket (6),
- the plunger (5) is shifted into the portafilter (15) in the predefined direction (4), until a predefined injection force F1 is achieved at the force measurement facility (3),
- water is subsequently introduced into the brewing chamber (7) via the water supply (9), whereby the force measured at the force measurement facility (3) increases to a total force F2,
- wherein the total force F2 is captured by the force measurement facility (3),
- the evaluation/control facility (11) ascertains a brewing pressure p = (F2-F1)/A in the brewing chamber (7) via a difference F2 - F1 between the forces F2, F1 that are measured by the force measurement facility (3) and an area A of the plunger (5) that faces towards the brewing chamber (7).

9. Method according to claim 8,
**characterised in that**
the evaluation/control facility (11) controls a shifting movement of the plunger (5) as a function of the ascertained brewing pressure p.

10. Method according to claim 8 or 9,
**characterised in that**
the evaluation/control facility (11) controls a water supply into the brewing chamber (7) as a function of the ascertained brewing pressure p.

11. Method according to one of claims 8 to 10,
**characterised in that**
the evaluation/control facility (11) controls the injection force F1 as a function of the ascertained brewing pressure p.

12. Method according to one of claims 8 to 11,
**characterised in that**
the evaluation/control facility (11) controls a grinding level of the coffee powder (8) as a function of the ascertained brewing pressure p.

13. Method according to one of claims 8 to 12,
**characterised in that**
the evaluation/control facility (11) controls a grinding quantity of coffee powder (8) as a function of the ascertained brewing pressure p.

## Revendications

1. Dispositif de préparation de café (1),
- avec un composant (2), en particulier un corps, et un support (6), disposé dessus par le biais d'un dispositif de mesure de force (3), pour un porte-filtre (15),
- avec un porte-filtre (15) pouvant être accroché dans le support (6),
- avec un poussoir (5) déplaçable dans un sens prédéfini (4) dans le porte-filtre (15),
- dans lequel le poussoir (5) et le porte-filtre (15) délimitent une chambre d'infusion (7),
- dans lequel le poussoir (5) présente une arrivée d'eau (9) menant dans la chambre d'infusion (7), par laquelle de l'eau appliquée avec pression peut être introduite dans la chambre d'infusion (7),
- dans lequel le dispositif de mesure de force (3) est conçu pour enregistrer une force de compression F1 apparaissant lors d'un déplacement du poussoir (5) dans le sens prédéfini (4) dans le porte-filtre (15) et agissant sur le café en poudre (8) disposé dans la chambre d'infusion (7) et une force totale F2 agissant sur le porte-filtre (15) par une introduction consécutive d'eau appliquée avec pression dans la chambre d'infusion (7),
- avec un dispositif de commande/d'évaluation (11) qui est conçu d'une manière telle qu'il détermine une pression d'infusion p = (F2-F1)/A dans la chambre d'infusion (7) par une différence F2 - F1 des forces F2, F1 mesurées par le dispositif de mesure de force (3) et d'une surface (A), orientée vers la chambre d'infusion (7), du poussoir (5).

2. Dispositif de préparation de café selon la revendication 1, **caractérisé en ce que** dans le porte-filtre (15) est prévu un canal de sortie du café (12) qui est relié par un filtre (13a) à la chambre d'infusion (7).

3. Dispositif de préparation de café selon la revendication 1 ou 2, **caractérisé en ce que** le poussoir (5) est rendu étanche par un joint annulaire (14) par rapport à une paroi interne du support (6).

4. Dispositif de préparation de café selon l'une des revendications précédentes,
**caractérisé en ce que** le dispositif de mesure de force (3) est conçu comme une cellule de pesage ou comme une jauge de contrainte.

5. Dispositif de préparation de café selon l'une des revendications précédentes,
**caractérisé en ce que** le dispositif de commande/d'évaluation (11) est conçu d'une manière telle qu'il commande un mouvement de déplacement du poussoir (5) en fonction de la pression d'infusion déterminée p.

6. Dispositif de préparation de café selon l'une des revendications précédentes,
**caractérisé en ce que** le dispositif de commande/d'évaluation (11) est conçu d'une manière telle qu'il commande une arrivée d'eau dans la chambre d'infusion (7) via une pompe à eau (10) en fonction de la pression d'infusion p déterminée.

7. Dispositif de préparation de café selon l'une des revendications précédentes,
**caractérisé en ce qu'**entre l'arrivée d'eau (9) et la chambre d'infusion (7) est disposé un autre filtre (13).

8. Procédé de détermination d'une force de compression F1 et d'une pression d'infusion p dans une chambre d'infusion (7) d'un dispositif de préparation de café (1) selon l'une des revendications précédentes, dans lequel
- du café en poudre (8) est chargé dans le porte-filtre (15),
- la chambre d'infusion (7) est fermée par la suspension du porte-filtre (15) dans le support (6),
- le poussoir (5) est déplacé dans le sens prédéfini (4) dans le porte-filtre (15) jusqu'à ce qu'une force de compression prédéfinie F1 soit atteinte sur le dispositif de mesure de force (3),
- ensuite, de l'eau est introduite dans la chambre d'infusion (7) par l'arrivée d'eau (9), ce par quoi la force mesurée sur le dispositif de mesure de force (3) augmente jusqu'à une force totale F2,
- dans lequel la force totale F2 est enregistrée par le dispositif de mesure de force (3)
- le dispositif de commande/d'évaluation (11) détermine une pression d'infusion p = (F2-F1)/A dans la chambre d'infusion (7) par une différence F2 - F1 des forces F2, F1 mesurées par le dispositif de mesure de force (3) et d'une surface A, orientée vers la chambre d'infusion (7), du poussoir (5).

9. Procédé selon la revendication 8, **caractérisé en ce que** le dispositif de commande/d'évaluation (11) commande un mouvement de déplacement du poussoir (5) en fonction de la pression d'infusion p déterminée.

10. Procédé selon la revendication 8 ou 9, **caractérisé en ce que** le dispositif de commande/d'évaluation (11) commande une arrivée d'eau dans la chambre d'infusion (7) en fonction de la pression d'infusion déterminée p.

11. Procédé selon l'une des revendications 8 à 10, **caractérisé en ce que** le dispositif de commande/d'évaluation (11) commande la force de compression F1 en fonction de la pression d'infusion déterminée p.

12. Procédé selon l'une des revendications 8 à 11, **caractérisé en ce que** le dispositif de commande/d'évaluation (11) commande un degré de mouture du café en poudre (8) en fonction de la pression d'infusion déterminée p.

13. Procédé selon l'une des revendications 8 à 12, **caractérisé en ce que** le dispositif de commande/d'évaluation (11) commande une quantité de mouture de café en poudre (8) en fonction de la pression d'infusion déterminée p.
